# EUROPÄISCHE PATENTSCHRIFT

(11) **EP 4 414 693 B1**
(45) Veröffentlichungstag und Bekanntmachung des Hinweises auf die Patenterteilung: **05.08.2026**
(21) Anmeldenummer: 24155154.8
(22) Anmeldetag: 01.02.2024
(51) Int. Cl.: G01N 21/88, F21S 4/28, F21V 8/00, F21V 5/00, F21V 7/00, F21Y 103/00

(54) **LÄNGLICHES LEUCHTENMODUL**
ELONGATED LIGHT MODULE
MODULE DE LUMINAIRE ALLONGÉ

(30) Priorität: 08.02.2023 DE 202023100582 U
(43) Veröffentlichungstag der Anmeldung: 14.08.2024
(73) Patentinhaber: Zumtobel Lighting GmbH, 6850 Dornbirn (AT)
(72) Erfinder: MACHATE, Andreas, 6851 Dornbirn (AT); SNELL, Anne Kimberley, 6851 Dornbirn (AT)
(74) Vertreter: Kiwit, Benedikt

(56) Entgegenhaltungen:
- DE-A1- 102015 006 012
- DE-A1- 102016 107 370
- US-A1- 2019 383 992

## Beschreibung

Die vorliegende Erfindung betrifft ein längliches Leuchtenmodul zur Abgabe von Licht, das eine Sichtprüfung eines Prüflings, beispielsweise einer Oberfläche eines Fahrzeugs, unterstützt. Die vorliegende Erfindung betrifft ferner eine Leuchte aufweisend mehrere solche Leuchtenmodule und einen Lichttunnel aufweisend ein oder mehrere solche Leuchtenmodule oder eine oder mehrere solche Leuchten.

Bei der beispielsweise in einer Endkontrolle stattfindenden Sichtprüfung eines Prüflings, der ein (gefertigtes) Produkt wie beispielsweise eine Oberfläche eines Fahrzeugs (Abdeckung, Karosserie etc.) sein kann, wird häufig mittels Licht ein Streifenmuster auf der zu prüfende Oberfläche abgebildet. Hierbei ist es üblich, das abzubildende Muster oder Bild direkt auf einen Lichtleiter vorzusehen und als Auskoppelelement zu verwenden. Ein Arbeiter betrachtet dabei das auf der Oberfläche abgebildete Muster und überprüft, ob das so abgebildete Muster von einer bestimmten Form abweicht. Durch die Abweichung kann der Arbeiter eine unzureichende Qualität (Kratzer, Beule, Delle etc.) der Oberfläche leicht erkennen, insbesondere leichter, als wenn er die Oberfläche unter nur normalen Lichtverhältnissen optisch prüfen würde. Eine solche Sichtprüfung findet insbesondere in der Produktion von Fahrzeugen (Automobilen oder sonstigen Fahrzeugen) statt, beispielsweise in einem sogenannten Lichttunnel. In einem Lichttunnel kann ein Fahrzeug über seine gesamte Länge einer optischen Oberflächenkontrolle unterzogen werden. Der Lichttunnel weist dabei üblicherweise eine Vielzahl von Leuchten auf, die den Lichttunnel bilden. Durch den Lichttunnel kann der Prüfling während der Sichtprüfung hindurchgeführt werden. Lichttunnel befinden sich oft am Ende einer Fertigungsstraße.

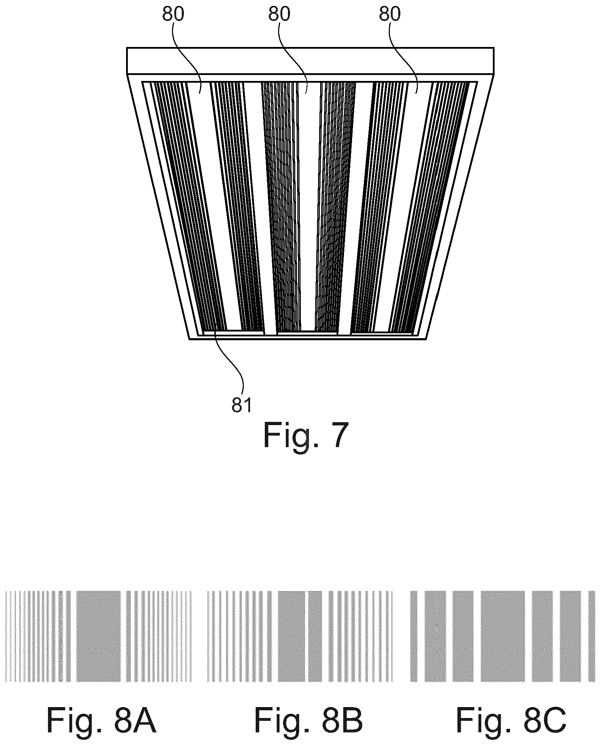

Von Vorteil ist, wenn das auf der Oberfläche des Prüflings abgebildete Muster aus kontraststarken Streifen besteht. Zur Verstärkung dieses Kontrasts von Streifen zu Streifen können entsprechende Leuchteneinsätze alternierend mit unterschiedlichen Farbtemperaturen angeordnet sein. Figur 7 lässt eine typische Oberflächenkontrollleuchte mit Streifenmuster 80 in 3-Fach Anordnung erkennen. Dabei ist ein Diffusor 81 speziell bedruckt, um eine schnelle und einfache Fehlererkennung bereitzustellen. Die Figuren 8A bis 8C lassen erkennen, dass die herkömmlichen Prüfmuster eine homogene Querschnittsfläche über die Länge aufweisen. Auch erkennt man, dass jeder Lichtstrahl beim Übersetzen von einer auf die andere Seite Bereiche mit Bedruckung durchsetzen muss.

Es hat sich nunmehr gezeigt, dass ein großer Anteil des Lichts, das in derartige Leuchteneinsätze eingekoppelt wird, nicht zur Erzeugung des (Prüf-)Musters beiträgt, sondern den Leuchteneinsatz vielmehr nur durchsetzt. Dies verringert den optischen Wirkungsgrad. Zudem hat es sich gezeigt, dass die Leuchteneinsätze verhältnismäßig aufwendig herzustellen sind. Siehe in dieser Hinsicht z. B. die Dokumente DE102015006012 A1 und DE102016107370 A1.

Die vorliegende Erfindung stellt sich die Aufgabe, einen oder mehrere der oben genannten Nachteile zu überwinden.

Diese und andere Aufgaben, die beim Lesen der folgenden Beschreibung noch genannt werden oder Fachmann erkannt werden können, werden mit dem Gegenstand der unabhängigen Ansprüche gelöst. Die abhängigen Ansprüche betreffen bevorzugte Ausführungsformen.

Gemäß einem ersten Aspekt betrifft die Erfindung ein längliches Leuchtenmodul zur Abgabe von Licht, das eine Sichtprüfung eines Prüflings, beispielsweise einer Oberfläche eines Fahrzeugs, unterstützt, indem das Licht auf einer Oberfläche des Prüflings ein Muster erzeugt, wobei das Leuchtenmodul aufweist: einen sich entlang einer Längsachse erstreckenden länglichen Lichtleiter, mehrere Leuchtmittel, die entlang der Längsachse verteilt angeordnet sind, um Licht in den Lichtleiter einzukoppeln, und mehrere Lichtauskopplungsstrukturen zur Auskopplung von in den Lichtleiter eingekoppeltem Licht aus dem Lichtleiter, wobei die Lichtauskopplungsstrukturen auf dem Lichtleiter und entlang der Längsachse verteilt vorgesehen sind. Der Lichtleiter weist auf: mehrere Lichtauskopplungsabschnitte, auf welchen jeweils eine der Lichtauskopplungsstrukturen vorgesehen ist; eine Verbindungsrippe, die wenigstens zwei der Lichtauskopplungsabschnitte miteinander verbindet; und mehrere Lichteinkopplungsstege, wobei von jedem der Lichtauskopplungsabschnitte ein oder mehrere der Lichteinkopplungsstege in einer Richtung quer zur Längsachse des Lichtleiters vorstehen. Die Leuchtmittel sind angeordnet, um Licht über die Lichteinkopplungsstege in den Lichtleiter in Richtung der Lichtauskopplungsabschnitte einzukoppeln.

Somit ergibt sich vor allem der Vorteil, dass von den Leuchtmitteln in den Lichtleiter eingekoppeltes Licht überwiegend oder nahezu ausschließlich in Richtung der Lichtauskopplungsabschnitte geleitet wird. Das von den Leuchtmitteln in den Lichtleiter eingekoppelte Licht wird als so gut wie nicht oder nur zu einem sehr geringen Anteil an den Lichtauskopplungsabschnitten vorbeigeführt. Dadurch kann ein besonders hoher Anteil des von den Leuchtmitteln abgegebenen Lichts auf die Lichtauskopplungsstrukturen treffen. Der optische Wirkungsgrad ist somit verbessert.

Außerdem ergeben sich die Vorteile eines geringeren Materialeinsatzes und eines geringeren Gewichts, da seitlich der Lichteinkopplungsstege kein Material vorgesehen ist. Der Lichtleiter kann also eine oder mehrere Ausnehmungen aufweisen, die die Lichteinkopplungsstege und die Verbindungsrippe zumindest teilweise bilden. Auch ist es möglich, mit dem erfindungsgemäß Leuchtenmodul weniger Leuchtmittel zu verwenden, da insbesondere dort, wo die einen oder mehreren Ausnehmungen vorgesehen sind, keine Einkopplung von Licht stattfindet. Auch ergibt sich insbesondere aufgrund der Ausbildung des Lichtleiters ein sehr platzsparender Aufbau, wodurch beispielsweise auch niedrigere Betriebsgeräte oder niedrige Wattage-Treiber einsetzbar sind.

Das Leuchtenmodul kann insbesondere bei der Beurteilung der Qualität einer beispielsweise polierten Oberfläche zur Anwendung kommen. Das Leuchtenmodul kann das Licht insbesondere so abgeben, dass das erzeugte Muster eine punkt- bzw. kreisförmige Prüfgeometrie aufweist. Punkt- und kreisförmige Muster haben die Eigenschaft nicht linearer Querschnitte über die Länge. Das Leuchtenmodul bietet dabei den Vorteil, dass Licht, das zwischen zwei zueinander beabstandeten Punkten in den Lichtleiter eingekoppelt wurde, wenig bis gar nicht den Lichtleiter durchsetzt und damit fast ausschließlich aus dem Lichtleiter zur Erzeugung des Musters herausgekoppelt wird. Der optische Wirkungsgrad kann damit trotz punkt- oder kreisförmiger Prüfgeometrie in dem erzeugten Muster hoch sein. Somit können mittels des Leuchtenmoduls Muster, die als Prüfgeometrie Punkte und/oder Kreise aufweisen, in Sachen Wirkungsgrad Mustern mit Streifen in möglichst nichts nachstehen.

Die Lichteinkopplungsstege können aufweisen: einen oder mehrere erste Lichteinkopplungsstege, die auf einer ersten Längsseite des Lichtleiters vorstehen, und einen oder mehrere zweite Lichteinkopplungsstege, die auf einer zweiten Längsseite des Lichtleiters vorstehen.

Der Lichtleiter kann mehrere entlang dessen Längsachse angeordnete und miteinander verbundene kreuz- und/oder T- und/oder H-förmige Abschnitte aufweisen, die wenigstens durch die Verbindungsrippe und die Lichteinkopplungsstege gebildet sind. So hat der Lichtleiter eine besonders materialsparende Ausbildung.

Der Lichtleiter kann eine Breite aufweisen, die wenigstens doppelt oder dreifach so groß ist wie die Breite der Verbindungsrippe. Die Breite der Verbindungsrippe erstreckt sich quer, vorzugsweise senkrecht zur Längsachse des Lichtleiters. Somit ergibt sich ein Lichtleiter, der besonders materialsparend ausgebildet ist.

Jeder der Lichteinkopplungsstege kann eine Breite aufweisen, die kleiner ist als die Breite wie beispielsweise der Durchmesser der jeweiligen Begrenzung jeder der Lichtauskopplungsstrukturen. Dadurch kann Material eingespart werden. Die Breite jedes Lichteinkopplungsstegs erstreckt sich quer zur Breite des Lichtleiters, vorzugsweise parallel zur Längsachse des Lichtleiters.

Der Lichtleiter kann eine die Vorder- und Rückseite des Lichtleiters verbindende Wand aufweisen, wobei die Wand mit einer Begrenzung, die eine der Lichtauskopplungsstrukturen begrenzt, wenigstens teilweise bündig ist. Zum Beispiel kann die Wand einen der Lichtauskopplungsabschnitte begrenzen, wobei die jeweils vorgesehene Lichtauskopplungsstruktur sich bis zu dieser Begrenzung des Lichtauskopplungsabschnitts erstreckt. Somit kann Material eingespart werden.

Die Lichtauskopplungsstrukturen können jeweils punktförmig sein und/oder jeweils durch eine Begrenzung mit einer geschlossen umlaufenden Form wie beispielsweise eine Kreisform begrenzt sein. Dadurch kann das von dem Lichtleiter abgegebene Licht ein Muster mit Formen erzeugen, die eine besonders gute Sichtprüfung des Prüflings ermöglichen.

Die Lichtauskopplungsstrukturen können Beschichtungen und/oder Bedruckungen sein. Somit können die Lichtauskopplungsstrukturen besonders einfach auf dem Lichtleiter vorgesehen werden. Die Beschichtungen und/oder Bedruckungen können so vorgesehen sein, dass in den Lichtleiter eingekoppeltes Licht dort, wo die Beschichtungen und/oder Bedruckungen vorgesehen sind, nicht innerhalb des Lichtleiters (total) reflektiert wird, sondern vielmehr auf die Beschichtungen und/oder Bedruckungen trifft. Das dort auftreffende Licht kann dann durch die jeweilige Beschichtung und/oder Bedruckungen so reflektiert zu werden, dass es den Lichtleiter über den jeweiligen Lichtauskopplungsabschnitt verlässt, beispielsweise über eine Seite (beispielsweise Vorderseite), die der Seite (beispielsweise Rückseite) gegenüberliegt, auf der die jeweilige Lichtauskopplungsstruktur vorgesehen ist. Die Beschichtungen und/oder Bedruckungen können auf einer Rückseite des Lichtleiters vorgesehen (beispielsweise angeordnet) sein.

Alternativ oder zusätzlich kann vorgesehen sein, dass die Lichtauskopplungsstrukturen jeweils Strukturen (Verletzungen, Rillen, Aufrauhungen, Dellen etc.) aufweist, die mit dem Lichtleiter integral ausgebildet sind. An solchen Strukturen kann das auftreffende Licht beispielsweise nicht total reflektiert und damit aus dem Lichtleiter ausgekoppelt werden oder so reflektiert werden, dass es über eine gegenüberliegende Seite des Lichtleiters aus dem Lichtleiter ausgekoppelt wird.

Die Lichtauskopplungsstrukturen können jeweils eine Breite wie beispielsweise einen Durchmesser im Bereich von 10 bis 60 mm, insbesondere von 20 bis 50 mm, aufweisen. Die Breite kann beispielsweise die Breite (oder der Durchmesser) der zuvor erwähnten Begrenzung sein.

Die Lichtauskopplungsstrukturen können auf dem Lichtleiter insbesondere so verteilt angeordnet sein, dass wenigstens ein Teil der Verbindungsrippe frei von Lichtauskopplungsstrukturen ist.

Das Leuchtenmodul kann ferner ein längliches optisches Element mit einer Längsachse und mit entlang dieser Längsachse verteilt vorgesehenen Lichtdurchtrittsabschnitten aufweisen, wobei das optische Element so angeordnet ist, dass wenigstens ein Teil der aus dem Lichtleiter mittels der Lichtauskopplungsstrukturen ausgekoppelten Lichtstrahlen durch die Lichtdurchtrittsabschnitte hindurchtreten kann. Somit kann insbesondere verhindert werden, dass Streulicht, das nicht mittels der Lichtauskopplungsstrukturen aus dem Lichtleiter ausgekoppelt wird, Teil des Lichts bildet, das das Muster für die Sichtprüfung erzeugt. So kann das durch das Licht ein besonders kontraststarkes Muster erzeugen, wodurch die Sichtprüfung des Prüflings besonders gut unterstützt werden kann. Die Lichtdurchtrittsabschnitte können Durchgriffsöffnungen und/oder transparente Abschnitte sein. Das optische Element kann wenigstens teilweise aus einem reflektierenden (beispielsweise weißen und/oder metallischen) Material gebildet sein und/oder einen Reflektor aufweisen. Somit kann Streulicht mittels des optischen Elements zurück in Richtung des Lichtleiters reflektiert werden. Das optische Element kann als Blende dienen, um eine Einsicht in die Leuchtenoptik (insbesondere des Lichtleiters) zu verhindern.

Das Leuchtenmodul kann eine transparente Abdeckung zum Schutz des Lichtleiters und vorzugsweise des optischen Elements aufweisen. Die transparente Abdeckung kann dabei insbesondere eine Verschmutzung des Lichtleiters (beispielsweise durch Fingerabdrücke) verhindern. Dies bewirkt, dass eine gleichbleibend hohe Qualität des von dem Leuchtenmodul abgegebenen Lichts für die Sichtprüfung gewährleistet ist. Die Abdeckung kann vom Lichtleiter aus gesehen hinter dem optischen Element angeordnet sein. Mit anderen Worten kann das optische Element zwischen dem Lichtleiter und der Abdeckung angeordnet sein. Das optische Element kann integral mit der Abdeckung ausgebildet und/oder als Beschichtung auf der Abdeckung aufgetragen sein. Insbesondere kann das optische Element auf einer dem Lichtleiter zugewandten Seite der Abdeckung vorgesehen sein.

Bevorzugt ist, wenn jeder der Lichtdurchtrittsabschnitte des optischen Elements eine jeweilige Form aufweist, die der Form der jeweils zugeordneten Lichtauskopplungsstruktur entspricht, und/oder größer ist (beispielsweise einen (etwas) größeren Durchmesser hat) als die jeweils zugeordnete Lichtauskopplungsstruktur.

Jedes Leuchtmittel kann angeordnet sein, Licht in ein distales Ende des jeweiligen Lichteinkopplungsstegs einzukoppeln. Jedes Leuchtmittel kann so angeordnet sein, dass sich der jeweilige Lichteinkopplungsstegs zu ihm hin erstreckt. Jeder Lichteinkopplungssteg kann ein proximales Ende aufweisen, mit dem er mit dem jeweiligen Lichtauskopplungsabschnitt verbunden, vorzugsweise integral verbunden ist.

Gemäß einem zweiten Aspekt betrifft die vorliegende Erfindung eine Leuchte, die mehrere (zwei oder mehr, vorzugsweise drei oder mehr) der zuvor beschriebenen Leuchtenmodule aufweist. Die Leuchtenmodulen können dabei auf unterschiedliche Weise zueinander angeordnet sein, beispielsweise geneigt zueinander und/oder entlang einem Bogen.

Die Leuchtenmodule können wenigstens ein Leuchtenmodul aufweisen, das relativ zu einem anderen Leuchtenmodul beweglich, vorzugsweise gelenkig gelagert ist, um beispielsweise relativ zu diesem anderen Leuchtenmodul neigbar zu sein. Somit ist insbesondere möglich, dass die Längsachsen der Leuchtenmodule unterschiedlich zueinander verlaufen, beispielsweise wahlweise parallel oder geneigt zueinander. Das wenigstens eine Leuchtenmodul kann relativ zu dem anderen Leuchtenmodul derart beweglich gelagert sein, dass ein Winkel zwischen den Längsachsen der Leuchtenmodule stufenlos einstellbar ist. Durch die bewegliche Lagerung zumindest eines Leuchtenmoduls kann die Leuchte einfach an die räumlichen Gegebenheiten des jeweils zu sichtprüfenden Prüflings angepasst werden. Insbesondere kann durch die bewegliche, insbesondere gelenkige Lagerung eine Radius- und/oder Umfangsanpassung ermöglicht werden, was beispielsweise bei der Anwendung der Leuchte in einem Lichttunnel von besonderem Vorteil ist.

Die Leuchtenmodule können aufweisen: ein erstes Leuchtenmodul zur Abgabe von Licht mit einer ersten Farbtemperatur, beispielsweise einer warmen Farbtemperatur, wobei die erste Farbtemperatur vorzugsweise eine Farbtemperatur im Bereich von 3000 bis 5300 K, insbesondere im Bereich von 3500 bis 4500 K, beispielsweise von 4000 K ist; und ein zweites Leuchtenmodul zur Abgabe von Licht mit einer zweiten Farbtemperatur, beispielsweise einer kalten Farbtemperatur, wobei die zweite Farbtemperatur vorzugsweise eine Farbtemperatur im Bereich von 5300 K oder mehr, insbesondere im Bereich von 6000 bis 7000 K, beispielsweise von 6500 K ist. Somit kann der Kontrast der von den Leuchtenmodule gebildeten (beispielsweise punkt- oder kreisförmigen) Prüfgeometrien, die das Muster bilden, verstärkt werden, was für die Sichtprüfung des Prüflings mithilfe des Musters besonders vorteilhaft ist.

Gemäß einem dritten Aspekt betrifft die vorliegende Erfindung einen Lichttunnel, der ein oder mehrere der zuvor beschriebenen Leuchtenmodule und/oder eine oder mehrere der zuvor beschriebenen Leuchten aufweist. Die Leuchtenmodule oder die Leuchten können dabei insbesondere so vorgesehen sein, dass sie einen Tunnel bilden, durch den ein Prüfling wie beispielsweise ein Fahrzeug (insbesondere ein Automobil) hindurchgeführt werden kann, um mittels des von den Leuchtenmodul oder Leuchten abgegebenen Lichts eine Sichtprüfung des Prüflings zu unterstützen. Die Leuchtenmodule können dabei insbesondere entlang eines kreisförmigen oder ovalen Bogens, insbesondere entlang eines Halbkreises oder einer Halbellipse, angeordnet sein.

Ausführungsformen der Erfindung werden nachfolgend anhand der Figuren der begleitenden Zeichnungen näher erläutert. Darin zeigen:
- Figur 1: eine schematische perspektivische Ansicht eines Leuchtenmoduls gemäß einer ersten Ausführungsform;
- Figur 2: das in Figur 1 gezeigte Leuchtenmodul in einer Draufsicht von oben (Blick auf die Rückseite des Leuchtenmoduls bzw. des Lichtleiters);
- Figur 3: ein Detail aus der Ansicht nach Figur 2;
- Figur 4: eine schematische Explosionsdarstellung des in Figur 1 gezeigten Leuchtenmoduls, wobei das Leuchtenmodult ferner ein optionales optisches Element und eine optionale transparente Abdeckung aufweist;
- Figur 5: eine schematische perspektivische Ansicht eines erfindungsgemäßen Leuchtenmoduls gemäß einer zweiten Ausführungsform;
- Figur 6: eine schematische perspektivische Ansicht eines beispielhaften Lichttunnels;
- Figur 7: eine schematische perspektivische Ansicht einer typischen Oberflächenkontrollleuchte mit Streifenmuster; und
- Figuren 8A bis 8C: Draufsichten herkömmlicher Prüfmuster.

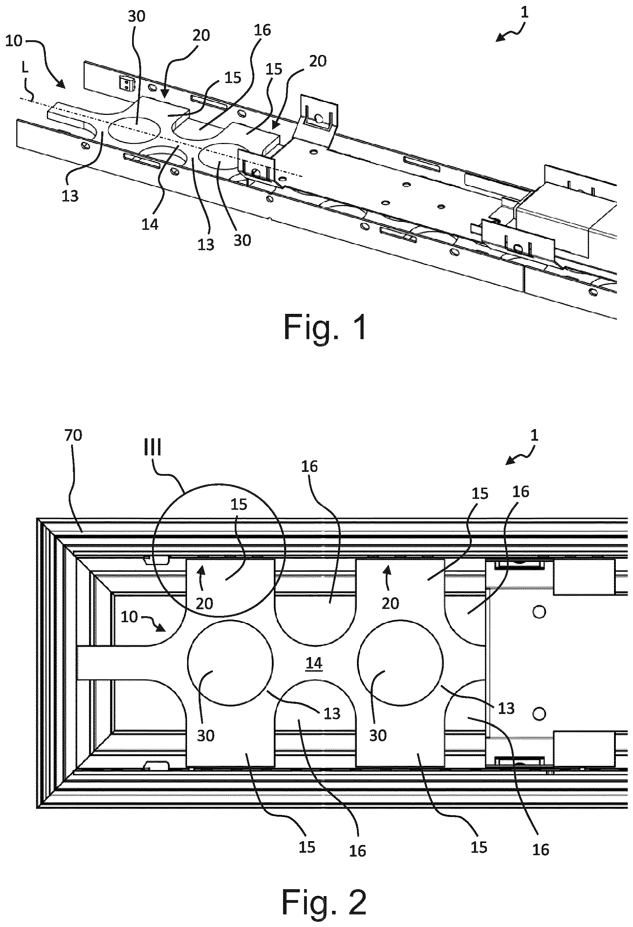

Figur 1 zeigt ein Leuchtenmodul 1 gemäß einer ersten Ausführungsform der Erfindung. Das Leuchtenmodul 1 ist vorgesehen, um Licht abzugeben, das eine Sichtprüfung (optische Qualitätskontrolle, Qualitätsprüfung etc.) eines Prüflings unterstützt, indem das so abgegebene Licht auf einer Oberfläche des Prüflings ein Muster erzeugt. Der Prüfling kann beispielsweise eine Oberfläche eines Fahrzeugs (Automobil, Motorrad, Fahrrad etc.) sein. Eine Person kann mithilfe des Musters Unregelmäßigkeiten beispielsweise Dellen, Kratzer, Ausbildungen in der Oberfläche einfach erkennen, indem Veränderungen des Musters (beispielsweise Verzerrungen) erkannt werden. Das Muster kann mehrere verteilt angeordnete und/oder diskrete (Prüf-)Geometrien aufweisen. Die Geometrien können raster- oder-gitterförmig angeordnet sein (beispielsweise in zwei oder mehr Reihen und Spalten) und/oder jeweils punktförmig ausgebildet und/oder durch eine geschlossen umlaufende Form (Kreisform, ovale Form etc.) gebildet sein.

Das Leuchtenmodul 1 weist einen länglichen Lichtleiter 10 auf. Der Lichtleiter 10 erstreckt sich entlang einer Längsachse L. Durch die längliche Ausbildung des Lichtleiters 10 weist dieser eine Länge auf, die einem Vielfachen (beispielsweise wenigstens einem Dreifachen oder Vierfachen) der Breite des Lichtleiters 10 entspricht. Der Lichtleiter 10 kann beispielsweise eine im Wesentlichen Stabform aufweisen und/oder auf zumindest einer Seite oder auf zwei gegenüberliegenden Seiten im Wesentlichen flach ausgebildet sein. Der Lichtleiter 10 kann aus einer Platte gebildet sein. Vorzugsweise ist der Lichtleiter 10 aus PMMA hergestellt.

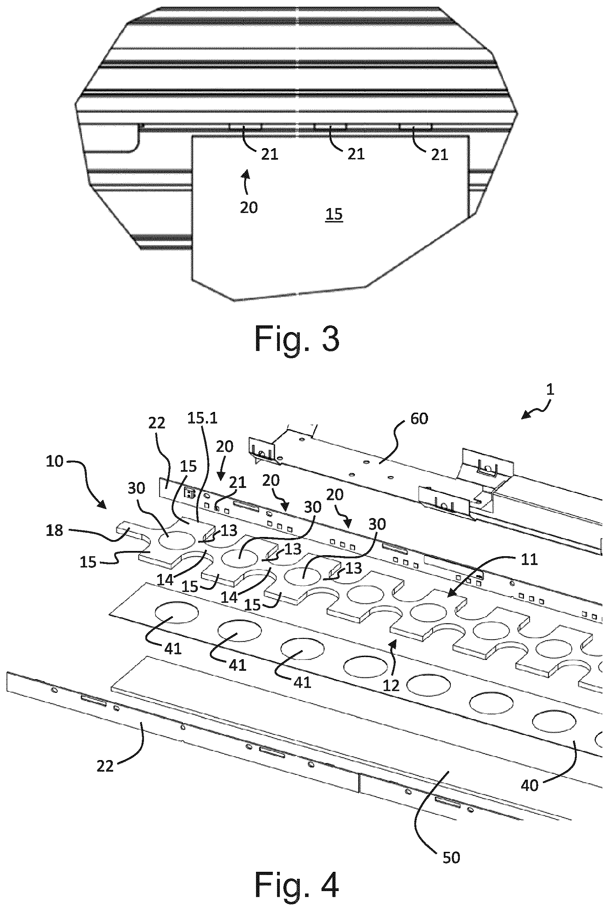

Das Leuchtenmodul 1 weist zudem mehrere Leuchtmittel 20 auf, die insbesondere in den Figuren 3 und 4 gut sichtbar sind; in der Figur 1 sind die Leuchtmittel 20 zum Großteil von dem Lichtleiter 10 verdeckt. Die Leuchtmittel 20 sind angeordnet, um Licht in den Lichtleiter 10 einzukoppeln. Das von den Leuchtmitteln 20 jeweils abgegebene Licht ist vorzugsweise weißes Licht und/oder weist vorzugsweise eine bestimmte Farbtemperatur auf. Die Farbtemperatur kann beispielsweise eine warme Farbtemperatur sein, die vorzugsweise in einem Bereich von 3000 bis 5300 K, besonders bevorzugt in einem Bereich von 3500 bis 4500 K liegt; in einer Ausführungsform kann die Farbtemperatur in etwa 4000 K betragen. Das von den Leuchtmitteln 20 abgegebene Licht kann aber auch eine andere Farbtemperatur aufweisen, beispielsweise eine kalte Farbtemperatur, die in einem Bereich von 5300 K oder mehr liegt, insbesondere in einem Bereich von 6000 bis 7000 K liegt; in einer Ausführungsform kann die kalte Farbtemperatur in etwa 6500 K betragen.

Jedes Leuchtmittel 20 kann eine oder mehrere Lichtquellen 21 wie beispielsweise LEDs und/oder OLEDs aufweisen. Zum Beispiel kann vorgesehen sein, dass jedes Leuchtmittel 20 zwei oder mehr (zum Beispiel nur drei) Lichtquellen 21 aufweist. Die Lichtquellen 21 können in Gruppen und/oder entlang einer Richtung parallel zur Längsachse L angeordnet sein. Benachbarte Leuchtmittel 20 können durch einen Abstand voneinander getrennt seien, der größer ist als der Abstand zwischen benachbarten Lichtquellen 21 eines jeweiligen Leuchtmittels 20. Die Leuchtmittel 20 können auf einer gemeinsamen Trägerelement 22 angeordnet sein. Das Trägerelement 22 kann plattenförmig und/oder länglich ausgebildet sein. Insbesondere kann das Trägerelement 22 eine Platine sein. Auf dem Trägerelement 22 können ein oder mehrere Komponenten angeordnet sein, insbesondere elektrische Komponenten (Schaltungen etc.) zum Betrieb der Leuchtmittel 20. Zudem kann das Trägerelement 22 Bereiche aufweisen, über die das Tragelement 22, und damit die Leuchtmittel 20, in einer definierten Lage, insbesondere relativ zu dem Lichtleiter 10, angeordnet werden kann.

Das Leuchtenmodul 1 weist ferner mehrere Lichtauskopplungsstrukturen 30 auf, mittels derer Licht, das in den Lichtleiter 10 eingekoppelt ist, aus dem Lichtleiter 10 ausgekoppelt werden kann. In der gezeigten Ausführungsform sind die Lichtauskopplungsstrukturen 30 auf einer Rückseite 11 des Lichtleiters 10 vorgesehen. In den Lichtleiter 10 eingekoppeltes Licht kann somit beispielsweise an den Lichtauskopplungsstrukturen 30 so reflektiert werden, dass es den Lichtleiter 10 über eine der Rückseite 11 gegenüberliegenden Seite, also beispielsweise einer Vorderseite 12 des Lichtleiters 10, verlässt. Zum Beispiel kann in den Lichtleiter 10 eingekoppeltes Licht auf die Lichtauskopplungsstrukturen 30 treffen und dort dann so reflektiert werden, dass es an der Vorderseite 12 nicht (total)reflektiert, sondern aufgrund des Einfallswinkels relativ in Bezug auf die Vorderseite 12 den Lichtleiter 10 über die Vorderseite 12 verlässt. In anderen Ausführungsform kann auch vorgesehen sein, dass die Lichtauskopplungsstrukturen 30 beispielsweise auf der Vorderseite 12 des Lichtleiters 10 vorgesehen sind, wobei auf die Lichtauskopplungsstrukturen 30 treffende Lichtstrahlen dann über die Lichtauskopplungsstrukturen 30 den Lichtleiter 10 verlassen. Die Lichtstrahlen werden dann also an Lichtauskopplungsstrukturen 30 nicht total reflektiert, sondern gebrochen und verlassen damit den Lichtleiter 10 über die Lichtauskopplungsstrukturen 30.

Wie insbesondere die Figur 4 erkennen lässt, sind die Lichtauskopplungsstrukturen 30 entlang der Längsachse L verteilt vorgesehen. Dies bedeutet insbesondere, dass die Lichtauskopplungsstrukturen 30 voneinander beabstandet sind und/oder nicht ineinander übergehen. Zwischen benachbarten Lichtauskopplungsstrukturen 30 weist der Lichtleiter 10 somit vorzugsweise einen Bereich auf, der frei Lichtauskopplungsstrukturen 30 ist und damit beispielsweise von keiner Lichtauskopplungsstruktur 30 bedeckt ist und/oder glatter als ein mit einer Lichtauskopplungsstruktur 30 versehener Bereich des Lichtleiters 10 ist. Jede der Lichtauskopplungsstrukturen 30 weist eine jeweilige Begrenzung auf, die, wie insbesondere die Figur 2 erkennen lässt, beispielsweise eine Kreisform sein kann. In anderen Ausführungsform kann die jeweilige Begrenzung auch eine andere geschlossen umlaufende Form aufweisen, beispielsweise eine ovale, mehreckige, rechteckige oder viereckige Form. Die Lichtauskopplungsstrukturen 30 sind also vorzugsweise in Form diskreter Bereiche vorgesehen, was insbesondere bedeutet, dass deren Begrenzungen nicht ineinander übergehen.

Die Lichtauskopplungsstrukturen 30 können Beschichtungen und/oder Bedruckungen sein, welche auf dem Lichtleiter 10 angeordnet sind. Dort, wo die Beschichtungen und/oder Bedruckungen vorgesehen sind, kann sich ein Grenzbereich zwischen dem Lichtleiter 10 und jeder Lichtauskopplungsstrukturen 30 ergeben, sodass in den Lichtleiter 10 eingekoppelte Lichtstrahlen über den Grenzbereich auf die jeweilige Lichtauskopplungsstruktur 30 treffen und von reflektiert werden, insbesondere so, dass die reflektierten Lichtstrahlen einen derartigen Winkel mit der gegenüberliegenden Vorderseite 12 einschließen, dass sie über die Vorderseite 12 den Lichtleiter 10 verlassen können. In anderen Ausführungsformen können die Lichtauskopplungsstrukturen 30 auch anders auf dem Lichtleiter 10 vorgesehen sein, beispielsweise durch integral mit dem Lichtleiter 10 ausgebildete Strukturen, insbesondere Verletzungen der Oberfläche des Lichtleiters, Aussparungen (Rillen, Einbuchtungen etc.), Vorsprüngen und/oder sonstigen Strukturen. An solchen Strukturen kann dann in den Lichtleiter 10 eingekoppeltes Licht so reflektiert werden kann, dass es dann beispielsweise über die Vorderseite 12 den Lichtleiter 10 verlassen kann. Alternativ oder zusätzlich kann auch möglich sein, dass auf in den Lichtleiter 10 eingekoppeltes Licht so auf die Lichtauskopplungsstrukturen 30, die beispielsweise wenigstens teilweise in Form der besagten Strukturen gebildet sind, trifft, dass es über die Lichtauskopplungsstrukturen 30 den Lichtleiter 10 verlässt. Auf solche Strukturen treffendes Licht wird dann also beispielsweise nicht totalreflektiert. Es kann auch vorgesehen sein, dass die Lichtauskopplungsstrukturen 30 wenigstens zum Teil durch eine oder mehrere Linsen gebildet sind, über die das in den Lichtleiter 10 eingekoppelte Licht den Lichtleiter 10 verlassen kann.

Der Lichtleiter 10 weist mehrere Lichtauskopplungsabschnitte 13 auf, wobei auf jedem der Lichtauskopplungsabschnitte 13 (genau) eine jeweilige der Lichtauskopplungsstrukturen 30 vorgesehen ist. Die Lichtauskopplungsabschnitte 13 sind vorzugsweise entlang der Längsachse L des Lichtleiters 10 verteilt angeordnet. Vorzugsweise weist der Lichtleiter 10 zwei oder mehr Lichtauskopplungsabschnitte 13 auf, beispielsweise drei oder mehr, insbesondere vier oder mehr. Der Lichtleiter 10 weist zudem eine Verbindungsrippe 14 auf, die wenigstens zwei (benachbarte) Lichtauskopplungsabschnitte 13 miteinander verbindet. Weist der Lichtleiter 10 also zum Beispiel drei oder mehr Lichtauskopplungsabschnitte 13 auf, sind zumindest zwei Verbindungsrippen 14 vorgesehen, die jeweils zwei zueinander benachbarte Lichtauskopplungsabschnitte 13 miteinander verbinden. Die zumindest eine Verbindungsrippe 14 erstreckt sich vorzugsweise entlang der Längsachse und/oder ist integral mit einem oder mehreren der Lichtauskopplungsabschnitte 13, die über die jeweilige Verbindungsrippe 14 miteinander verbunden sind, integral ausgebildet. Der Lichtleiter 10 kann zudem eine Rippe 18 aufweisen, die von einem der Lichtauskopplungsabschnitte 13 vorsteht. Somit kann das freie Ende der Rippe 18 zum Beispiel zur Anbringung des Lichtleiters 10 dienen, beispielsweise zur Anbringung in einer Leuchte und/oder an einem Gehäuseteil.

Der Lichtleiter 10 weist zudem mehrere Lichteinkopplungsstege 15 auf. Die Lichteinkopplungsstege 15 sind dabei so vorgesehen, dass sich von jedem der Lichtauskopplungsabschnitte 13 (vorzugsweise nur) zwei der Lichteinkopplungsstege 15 vorstehen, und zwar in einer Richtung quer, insbesondere senkrecht zur Längsachse L des Lichtleiters 10. In der gezeigten Ausführungsform stehen die Lichteinkopplungsstege 15 auf beiden Längsseiten des Lichtleiters 10 vor. Dadurch ergibt sich eine (in Draufsicht gesehene oder in einer Richtung senkrecht zur Längsachse L gesehene) Form des Lichtleiters 10, die aus mehreren kreuz- und/oder H-förmigen Abschnitten zumindest teilweise gebildet ist oder besteht. Die Lichteinkopplungsstege 15 können in einer anderen Ausführungsform auch so vorgesehen sein, dass von jedem der Lichtauskopplungsabschnitte 13 nur einer der Lichteinkopplungsstege 15 in Richtung quer zur Längsachse L vorsteht. So kann dann beispielsweise vorgesehen sein, dass die Lichteinkopplungsstege 15 auf nur einer Längsseite des Lichtleiters 10 vorstehen, wodurch sich beispielsweise eine (in Draufsicht gesehene oder in einer Richtung senkrecht zur Längsachse L gesehene) Form des Lichtleiters 10 ergibt, die durch mehrere T- und/oder U-förmige Abschnitte gebildet ist.

Wie insbesondere die Figuren 1 bis 3 gut erkennen lassen, ist jedes der Leuchtmittel 20 so angeordnet, dass es Licht über einen jeweiligen der Lichteinkopplungsstege 15 in den Lichtleiter 10 eingekoppelt. Das so von jedem Leuchtmittel 20 in den Lichtleiter 10 eingekoppelte Licht wird zunächst über den jeweiligen Lichteinkopplungssteg 15 in Richtung des Lichtauskopplungsabschnitts 13, von welchen der jeweilige Lichteinkopplungssteg 15 vorsteht, geleitet, bevor es in den Lichtauskopplungsabschnitt 13 gelangt und dort dann mittels der jeweiligen Lichtauskopplungsstruktur 30 aus dem Lichtleiter 10 ausgekoppelt wird. Bevorzugt ist, wenn jedes der Leuchtmittel 20 so angeordnet ist, dass es Licht über das distale Ende 15.1 des jeweiligen Lichteinkopplungsstegs 15 in diesen einkoppelt. Das distale Ende 15.1 kann beispielsweise eine die Rückseite 11 mit der Vorderseite 12 verbindende Fläche aufweisen, wobei das jeweilige Leuchtmittel 20 wenigstens ein Teil des von ihm abgegebenen Lichts über diese Fläche in den jeweiligen Lichteinkopplungssteg 15 einleitet. Mit anderen Worten kann jedes Leuchtmittel 20 so angeordnet sein, dass der Großteil des von dem jeweiligen Leuchtmittel 20 abgegebenen Lichts nicht über die lateralen Seiten des jeweiligen Lichteinkopplungssteg 15 in diesen einkoppelt wird. Somit kann gewährleistet werden, dass besonders viel des von dem Leuchtmittel 20 abgegebenen Lichts zu den Lichtauskopplungsabschnitte 13 geleitet wird damit zur gewünschten Lichtabgabe durch das Leuchtenmodul 1 beiträgt.

Somit kann das Leuchtenmodul 1 Licht so abgeben, dass das Licht auf der Oberfläche des Prüflings ein Muster erzeugt, dass in etwa der Form der Lichtauskopplungsstrukturen 30 entspricht und/oder die Form der Lichtauskopplungsstrukturen 30 besonders gut nachbildet. Dies ist insbesondere darin begründet, dass durch die Einkopplung des von den Leuchtmitteln 20 abgegebenen Lichts in die Lichteinkopplungsstege 15 besonders wenig bis kein Licht, das über die Leuchtmittel 20 in den Lichtleiter 10 eingeleitet ist, in die Verbindungstege 14 geleitet und über diese als Streulicht abgegeben wird. Das mittels der Lichtauskopplungsstrukturen 30 aus dem Lichtleiter 10 ausgekoppelte Licht ist damit besonders kontraststark, da insbesondere über die Verbindungsrippe(n) 14 abgegebenes Streulicht besonders wenig oder gar nicht zu dem von dem Lichtleiter 10 abgegebenen Licht, dass auf der Oberfläche des Prüflings ein Muster erzeugt, beiträgt.

Die Leuchtmittel 20 sind vorzugsweise entsprechend der Verteilung der Lichteinkopplungsstege 13 entlang der Längsachse L auf dem Trägerelement 22 vorgesehen. Somit können die Leuchtmittel 20 insbesondere so vorgesehen sein, dass nur Leuchtmittel 20 an den Positionen des Lichtleiters 10 positioniert sind, an denen die Lichteinkopplungsstege zum Einkoppeln von Licht vorhanden sind, wohingegen die Bereiche des Trägerelements 22, die den jeweiligen Ausnehmungen 16 gegenüberliegen vorzugsweise nicht mit Leuchtmittels 20 bestückt sind.

Der Lichtleiter 10 weist durch die wenigstens eine Verbindungsrippe **14** und die mehreren Lichteinkopplungsstege 15 mehrere Ausnehmungen (oder Freiräume) 16, die vorzugsweise entlang der Längsachse L verteilt vorgesehen sind. Die Ausnehmungen 16 sind somit wenigstens durch die wenigstens eine Verbindungsrippe 14 und die mehreren Lichteinkopplungsstege 15 begrenzt. Dadurch erhält der Lichtleiter 10 eine besonders materialsparende Gestalt. Auch kann somit die Anzahl der Leuchtmittel verringert werden, da über die Bereiche mit Ausnehmungen 16 kein Licht in den Lichtleiter 10 eingekoppelt wird; vielmehr wird Licht vorzugsweise nur über die Lichteinkopplungsstege 15 mittels der Leuchtmittel 20 in den Lichtleiter 10 eingekoppelt. Wie insbesondere die Figur 2 erkennen lässt, kann der Lichtleiter 10 derart gestaltet sein, dass er Ausnehmungen 16 auf beiden Längsseiten des Lichtleiters 10 aufweist, sodass beispielsweise in Breitenrichtung des Lichtleiters 10 gesehen (also in einer Richtung senkrecht zur Längsachse L) zwischen zwei vorzugsweise benachbarten Lichtauskopplungsabschnitten 13 und/oder Lichtauskopplungsstrukturen 30 wenigstens ein Teil einer Ausnehmung 16 vorgesehen ist oder liegt. Somit ist besonders gut gewährleistet, dass über die Lichteinkopplungsstege 15 eingekoppeltes Licht auf einen Lichtauskopplungsabschnitt 13 mit Lichtauskopplungsstruktur trifft und nicht einfach zwischen zwei Lichteinkopplungsstegen 15 hindurchgelangen kann. Die Ausnehmungen 16 sind vorzugsweise entlang der Längsachse L gleichmäßig verteilt angeordnet.

Wie insbesondere die Figuren 1 und 2 gut erkennen lassen, hat die wenigstens eine Verbindungsrippe 14 eine im Vergleich zur (Gesamt-)Breite des Lichtleiters 10 besonders geringe Breite, wobei die Breite sich jeweils quer oder senkrecht zur Längsachse L erstreckt. Die Dicke der Verbindungsrippe 14 entspricht allerdings vorzugsweise der Dicke des Lichtleiters 10, beispielsweise der Lichteinkopplungsstege 15. Zum Beispiel kann der Lichtleiter 10 eine Breite aufweisen, die wenigstens doppelt, wenigstens dreimal, wenigstens viermal oder wenigstens fünfmal so groß ist wie die Breite der Verbindungsrippe 14. Hierdurch kann ein besonders materialsparender Lichtleiter 10 gebildet werden. Alternativ oder zusätzlich kann vorgesehen sein, dass die Breite des Lichtleiters 10 wenigstens der Länge der Verbindungsrippe 14 oder der Breite der Ausnehmung 16 zwischen zwei benachbarten Lichteinkopplungsstegen 15 entspricht.

Die Lichtauskopplungsstrukturen 30 können jeweils eine Breite aufweisen, die vorzugsweise in einem Bereich von 10 bis 60 mm, insbesondere von 20 bis 50 mm liegt. Die Breite kann beispielsweise ein Durchmesser sein. Jeder der Lichteinkopplungsstege 15 weist eine Breite auf, die sich beispielsweise parallel zur Längsachse L erstreckt. Bevorzugt ist, wenn die Breite jedes Lichteinkopplungsstegs 15 der Breite der jeweiligen Lichtauskopplungsstruktur 30 entspricht oder kleiner (oder etwas größer, beispielsweise 5-10%) als die Breite der jeweiligen Lichtauskopplungsstruktur 30 ist.

Wie in Figur 4 dargestellt, kann das Leuchtenmodul 1 ferner ein längliches optisches Element 40 aufweisen. Das optische Element 40 erstreckt sich ebenfalls entlang einer Längsachse, wobei das optische Element 40 vorzugsweise so angeordnet ist, dass diese Längsachse zur Längsachse L des Lichtleiters 10 ist. Das optische Element 40 weist mehrere Lichtdurchtrittsabschnitte 41 auf, die entlang der Längsachse des optischen Elements 41 verteilt angeordnet sind. Die Lichtdurchtrittsabschnitte 41 können beispielsweise durch eine geschlossen umlaufende Form (Kreisform, ovale Form, mehreckige Form etc.) begrenzt sein, wobei die Form zumindest hinsichtlich ihrer Form (und vorzugsweise nicht hinsichtlich ihrer Größe) zu der Form einer dem jeweiligen Lichtdurchtrittsabschnitt 41 zugeordneten Lichtauskopplungsstruktur 30 korrespondiert (oder entspricht). Die Begrenzung oder Form jedes Lichtdurchtrittsabschnitts 41 kann eine Breite wie beispielsweise einen Durchmesser aufweisen, die größer ist als die Breite (beispielsweise Durchmesser) der Begrenzung der dem jeweiligen Lichtdurchtrittsabschnitt 41 zugeordneten Lichtauskopplungsstruktur 30. Wie in der Figur 4 dargestellt, kann der Lichtdurchtrittsabschnitt 41 eine Durchgriffsöffnung sein. Alternativ oder zusätzlich können die Lichtdurchtrittsabschnitte 41 einen transparenten Abschnitt aufweisen, der beispielsweise in einem sonst nichttransparent ausgebildeten optischen Element 40 vorgesehen ist.

Das optische Element 40 ist so angeordnet, dass wenigstens ein Teil der aus dem Lichtleiter 10 mittels der Lichtauskopplungsstrukturen 30 ausgekoppelten Lichtstrahlen, die den Lichtleiter 10 vorzugsweise über die Lichtauskopplungsabschnitte 13 verlassen, durch die Lichtdurchtrittsabschnitte 41 hindurchtreten kann. Zum Beispiel kann das optische Element 40 so angeordnet sein, dass jeder Lichtdurchtrittsabschnitte 41 konzentrisch mit einer jeweiligen der Lichtauskopplungsstrukturen 30 ist.

Das optische Element 40 kann zumindest teilweise aus einen reflektierenden Material (Metall, weißer Kunststoff, weißer Lack, Keramik etc.) hergestellt sein, sodass das optische Element 40 Streulicht (also insbesondere Licht, dass der Lichtleiter 10 über andere Bereiche als die Lichtauskopplungsabschnitte 13 abgibt, zum Beispiel über die wenigstens eine Verbindungsrippe 14) reflektiert. Das optische Element 40 kann insbesondere so gestaltet sein, dass es eine Einsicht auf zumindest die Ausnehmungen 16 verhindert. Mit dem optischen Element 40 ist es möglich, dass das mittels des optischen Elements 40 reflektierte Licht (Streulicht) wenig oder gar nicht zur Lichtabgabe des Leuchtenmoduls 1 und damit wenig bis gar nicht zur Erzeugung des die Sichtprüfung unterstützenden Musters beiträgt. Das optische Element 40 kann aus einer länglichen Platte gebildet sein, wobei die Platte insgesamt aus dem reflektierenden Material hergestellt sein kann und/oder wobei das reflektierende Material auf der dem Lichtleiter 10 zugewandten Seite des optischen Elements 40 gebildet sein kann, beispielsweise indem diese Seite mit dem reflektierenden Material beschichtet ist.

Wie die Figur 4 ebenfalls erkennen lässt, kann das Leuchtenmodul 1 ferner eine transparente Abdeckung 50 aufweisen, die ebenfalls länglich und/oder ebenfalls entlang einer Längsachse sich erstreckenden ausgebildet sein kann. Die transparente Abdeckung 50 ist vorzugsweise so angeordnet, dass deren Längsachse parallel zur Längsachse des Lichtleiters 10 und/oder parallel zur Längsachse des optischen Elements 40 ist. Die transparente Abdeckung 50 ist dabei so vorgesehen, dass sie zum Schutz des Lichtleiters 10 und vorzugsweise des optischen Elements 40 dient. Durch die transparente Abdeckung 50 kann somit insbesondere verhindert werden, dass der Lichtleiter 10 (beispielsweise aufgrund von Fingerabdrücken) verschmutzt wird, zum Beispiel während dem Zusammenbaus oder der Wartung oder des Verstellens des Leuchtenmoduls 1. So kann eine hohe Qualität des durch das Leuchtenmodul 1 abgegebenen Lichts, und somit des so erzeugten Musters für die Sichtprüfung, gewährleistet werden. Die Abdeckung 50 ist vorzugsweise so vorgesehen, dass sie vom Lichtleiter 10 aus gesehen hinter dem optischen Element 40 angeordnet ist. Das optische Element 40 kann also insbesondere zwischen Lichtleiter 10 und Abdeckung 50 vorgesehen sein.

Die Abdeckung 50 kann mit einer Beschichtung derart versehen sein, dass nichttransparente (lichtdichte) Bereiche auf der Abdeckung 50 vorgesehen sind. Diese Bereiche können so vorgesehen sein, dass eine Einsicht auf die Ausnehmungen 16 verhindert ist und/oder dass unbeschichtete Bereiche der Abdeckung 50 eine Geometrie des durch das Leuchtenmodul 1 erzeugten Musters bilden. Somit kann der Kontrast zu einer bevorzugt weißen Prüfbildprojektion optimiert werden. Die Beschichtung kann lichtabsorbierend (also beispielsweise (tief) schwarz) und/oder auf sonstige Weise lichtdicht (reflektierend etc.) gebildet sein.

Wie in Figur 4 dargestellt, kann das Leuchtenmodul 1 ein Trägerelement 60 aufweisen, auf dem eine oder mehrere Komponenten zum Betrieb des Leuchtenmoduls 1 (zum Beispiel ein Betriebsgerät oder sonstige elektrische und/oder elektronische Komponenten) angeordnet sind. Das Tragelement 60 ebenfalls länglich ausgebildet sein und sich entlang einer Längsachse erstrecken, wobei das Trägerelement 60 vorzugsweise so vorgesehen ist, dass dessen Längsachse parallel zu zumindest der Längsachse des Lichtleiters 10 ist.

Das Leuchtenmodul 1 kann, wie insbesondere die Figur 2 erkennen lässt, ein Gehäuse 70 aufweisen, in dem der Lichtleiter 10 und die Leuchtmittel 20. Optional können das Trägerelement 60 und/oder das optische Element 40 in dem Gehäuse 70 angeordnet sein. Das Gehäuse 70 kann durch die transparente Abdeckung 50 abgeschlossen sein.

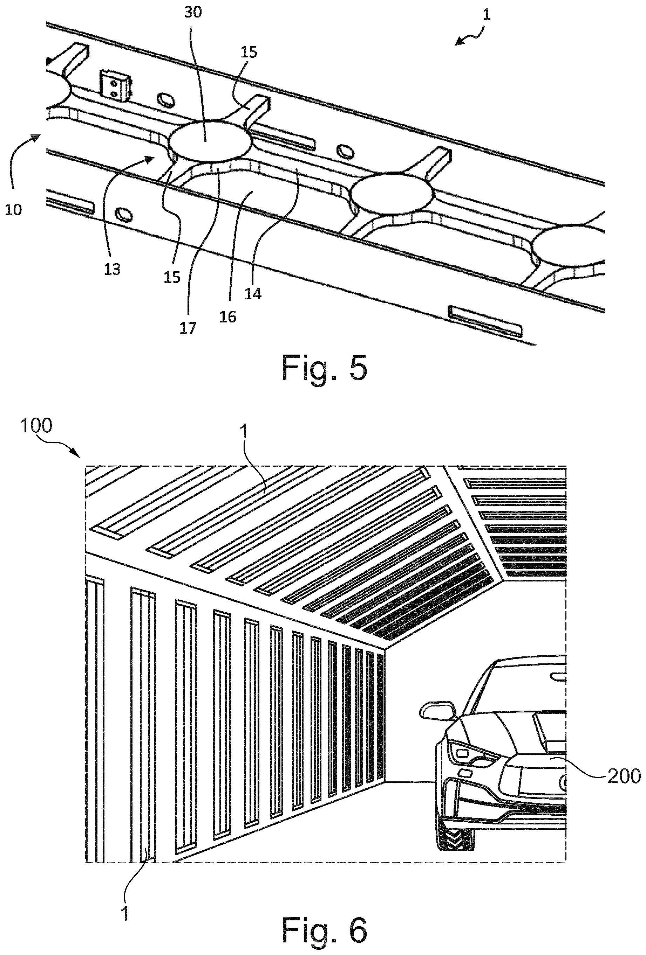

Figur 5 lässt eine zweite Ausführungsform erkennen, in der die Verbindungsrippe 14 und/oder die Lichteinkopplungsstege 15 jeweils besonders schmal ausgebildet sind, insbesondere schmaler als in der ersten Ausführungsform. Die von einer Verbindungsrippe 14 und zwei Lichteinkopplungsstegen 15 begrenzte Ausnehmung 16 kann dadurch vergrößert werden, sodass der Lichtleiter 10 hinsichtlich Material noch weiter optimiert ist, also besonders viel Material einsparen kann. Der Lichtleiter 10 kann eine die Rückseite 11 mit der Vorderseite 12 verbindende Wand 17 aufweisen, wobei die Höhe dieser Wand 17 beispielsweise der Dicke des Lichtleiters 10 entspricht. Die Wand 17 ist dabei so vorgesehen, dass sie mit der Begrenzung einer der Lichtauskopplungsstrukturen 30 wenigstens teilweise bündig ist. Die Wand 17 kann beispielsweise eine Kante aufweisen, wobei die jeweilige Lichtauskopplungsstruktur 30 sich bis hin zu dieser Kante erstreckt. Mit anderen Worten kann in einer Draufsicht des Lichtleiters 10 gesehen (also in einer Richtung senkrecht zur Längsachse L gesehen) die Wand 17 von der Begrenzung der Lichtauskopplungsstruktur 30 nicht beabstandet sein. Die Wand 17 kann somit zumindest einem Teil der Form der Begrenzung der jeweiligen Lichtauskopplungsstruktur 30 entsprechend. Die Wand 17 kann beispielsweise bogenförmig, insbesondere konvex bogenförmig ausgebildet sein. Es können eine oder mehrere Wände 17 vorgesehen sein, die beispielsweise einen einzelnen Lichtauskopplungsabschnitt 13 begrenzen.

In der in Figur 5 dargestellte Ausführungsform kann jeder Lichteinkopplungssteg 15 so schmal bzw. nur so breit ausgebildet sein, dass je Lichteinkopplungssteg 15 ein Leuchtmittel 20 mit nur einer Lichtquelle 21 oder mit nur zwei Lichtquelle 21 vorgesehen sein kann, um in den jeweiligen Lichteinkopplungsstegs 15 Licht einzukoppeln.

Figur 6 zeigt einen Lichttunnel 100, der mehrere der zuvor beschriebenen Leuchtenmodule 1 aufweist. Die Leuchtenmodule 1 sind entlang einer Umfangsrichtung und entlang einer Längsrichtung verteilt angeordnet, um den Lichttunnel 100 zu bilden. Durch den Lichttunnel 100 kann somit ein Fahrzeug 200 (beispielsweise ein Automobil) durchgeführt werden, während die Leuchtenmodule 1 mittels des von ihnen abgegebenen Lichts auf der Oberfläche des Fahrzeugs 200 ein Muster erzeugen, das eine Sichtprüfung dieser Oberfläche unterstützt. So können Unregelmäßigkeiten (Kratzer, Dellen, Beulen etc.) in der Oberfläche des Fahrzeugs 200, beispielsweise in der Karosserie, einfach ermittelt werden. Die Leuchtenmodule 1 können wenigstens ein Leuchtenmodul 1 aufweisen, das relativ zu einem anderen Leuchtenmodul 1 beweglich, vorzugsweise gelenkig gelagert ist. Somit können die Leuchtenmodule 1 beispielsweise relativ zueinander geneigt werden, um beispielsweise den Umfang und/oder Radius des Lichttunnel 200 zu ändern. Alternativ oder zusätzlich ist es möglich, dass die Leuchtenmodule 1 Licht mit unterschiedlichen Farbtemperaturen abgeben, beispielsweise einer warmen Farbtemperatur und einer kalten Farbtemperatur.

Das Leuchtenmodul 1 ist nicht auf die zuvor beschriebene Anwendung in einem Lichttunnel 100 beschränkt. Denkbar ist, dass auch eine andere Leuchte (Stehleuchte, Deckenleuchte, Wandleuchte etc.) ein oder mehrere der oben beschriebenen Leuchtenmodule 1 aufweisen kann. Die Leuchte kann eine Halterung aufweisen, an der die Leuchtenmodule 1 gehalten sind. Wenigstens eines der Leuchtenmodule 1 kann an der Halterung beweglich, vorzugsweise gelenkig gelagert sein, damit die Lage (Position und/oder Orientierung) dieses Leuchtenmoduls 1 relativ zu dem anderen Leuchtenmodul 1 angepasst werden kann. Die Leuchte kann zudem eine Arretierung aufweisen, mit der die Leuchtenmodule 1 in einer bestimmten Lage zueinander arretiert werden können.

Die Erfindung wird lediglich durch die angehängten Ansprüche definiert.

## Patentansprüche

1. Längliches Leuchtenmodul (1) zur Abgabe von Licht, das eine Sichtprüfung eines Prüflings, beispielsweise einer Oberfläche eines Fahrzeugs (200), unterstützt, indem das Licht auf einer Oberfläche des Prüflings ein Muster erzeugt, wobei das Leuchtenmodul (1) aufweist:
einen sich entlang einer Längsachse (L) erstreckenden länglichen Lichtleiter (10),
mehrere Leuchtmittel (20), die entlang der Längsachse (L) verteilt angeordnet sind, um Licht in den Lichtleiter (10) einzukoppeln,
mehrere Lichtauskopplungsstrukturen (30) zur Auskopplung von in den Lichtleiter (10) eingekoppeltem Licht aus dem Lichtleiter (10), wobei die Lichtauskopplungsstrukturen (30) auf dem Lichtleiter (10) und entlang der Längsachse (L) verteilt vorgesehen sind,
wobei der Lichtleiter (10) aufweist:
mehrere Lichtauskopplungsabschnitte (13), auf welchen jeweils eine der Lichtauskopplungsstrukturen (30) vorgesehen ist,
eine Verbindungsrippe (14), die wenigstens zwei der Lichtauskopplungsabschnitte (13) miteinander verbindet, und
mehrere Lichteinkopplungsstege (15), wobei von jedem der Lichtauskopplungsabschnitte (13) einer oder mehrere der Lichteinkopplungsstege (15) in einer Richtung quer zur Längsachse (L) des Lichtleiters (10) vorstehen,
wobei die Leuchtmittel (20) angeordnet sind, Licht über die Lichteinkopplungsstege (20) in den Lichtleiter (10) in Richtung der Lichtauskopplungsabschnitte (13) einzukoppeln.

2. Leuchtenmodul (1) nach Anspruch 1, wobei die Lichteinkopplungsstege (15) aufweisen: einen oder mehrere erste Lichteinkopplungsstege (10), die auf einer ersten Längsseite des Lichtleiters (10) vorstehen, und einen oder mehrere zweite Lichteinkopplungsstege (10), die auf einer zweiten Längsseite des Lichtleiters (10) vorstehen.

3. Leuchtenmodul (1) nach Anspruch 1 oder 2, wobei der Lichtleiter (10) mehrere entlang dessen Längsachse (L) angeordnete und miteinander verbundene kreuz- und/oder T- und/oder H-förmige Abschnitte aufweist, die wenigstens durch die Verbindungsrippe (14) und die Lichteinkopplungsstege (15) gebildet sind.

4. Leuchtenmodul (1) nach einem der vorhergehenden Ansprüche, wobei der Lichtleiter (10) eine Breite aufweist, die wenigstens doppelt oder dreifach so groß ist wie die Breite der Verbindungsrippe (14).

5. Leuchtenmodul (1) nach einem der vorhergehenden Ansprüche, wobei jeder der Lichteinkopplungsstege (15) und/oder die Verbindungsrippe (14) eine Breite aufweist, die kleiner ist als die Breite wie beispielsweise der Durchmesser der jeweiligen Begrenzung jeder der Lichtauskopplungsstrukturen (30).

6. Leuchtenmodul (1) nach einem der vorhergehenden Ansprüche, wobei der Lichtleiter (10) eine die Vorder- und Rückseite (11, 12) des Lichtleiters (10) verbindende Wand (17) aufweist, die mit einer Begrenzung, die eine der Lichtauskopplungsstrukturen (30) begrenzt, wenigstens teilweise bündig ist.

7. Leuchtenmodul (1) nach einem der vorhergehenden Ansprüche, wobei die Lichtauskopplungsstrukturen (30) jeweils punktförmig sind und/oder jeweils durch eine Begrenzung mit einer geschlossen umlaufenden Form wie beispielsweise einer Kreisform begrenzt sind, und/oder wobei die Lichtauskopplungsstrukturen (30) jeweils eine Breite wie beispielsweise einen Durchmesser im Bereich von 10 bis 60 mm, insbesondere von 20 bis 50 mm, aufweisen.

8. Leuchtenmodul (1) nach einem der vorhergehenden Ansprüche, wobei die Lichtauskopplungsstrukturen (30) Beschichtungen und/oder Bedruckungen sind.

9. Leuchtenmodul (1) nach einem der vorhergehenden Ansprüche, ferner aufweisend ein längliches optisches Element (40) mit einer Längsachse und mit entlang dieser Längsachse verteilt vorgesehenen Lichtdurchtrittsabschnitten (41) wie beispielsweise Durchgriffsöffnungen und/oder transparenten Abschnitten, wobei das optische Element (40) so angeordnet ist, dass wenigstens ein Teil der aus dem Lichtleiter (10) mittels der Lichtauskopplungsstrukturen (30) ausgekoppelten Lichtstrahlen durch die Lichtdurchtrittsabschnitte (41) hindurchtreten kann.

10. Leuchtenmodul (1) nach einem der vorhergehenden Ansprüche, ferner aufweisend eine transparente Abdeckung (50) zum Schutz des Lichtleiters (10) und vorzugsweise des optischen Elements (40), wobei vorzugsweise die Abdeckung (50) vom Lichtleiter (10) aus gesehen hinter dem optischen Element (40) angeordnet ist.

11. Leuchtenmodul (1) nach einem der vorhergehenden Ansprüche, wobei jedes Leuchtmittel (20) angeordnet ist, Licht in ein distales Ende (15.1) des jeweiligen Lichteinkopplungsstegs (15) einzukoppeln.

12. Leuchte, aufweisend mehrere Leuchtenmodule (1) nach einem der vorhergehenden Ansprüche.

13. Leuchte nach Anspruch 12, wobei die Leuchtenmodule (1) wenigstens ein Leuchtenmodul (1) aufweisen, das relativ zu einem anderen Leuchtenmodul (1) beweglich, vorzugsweise gelenkig gelagert ist, um beispielsweise relativ zu dem anderen Leuchtenmodul (1) neigbar zu sein.

14. Leuchte nach Anspruch 12 oder 13, wobei die Leuchtenmodule (1) aufweisen:
ein erstes Leuchtenmodul (1) zur Abgabe von Licht mit einer ersten Farbtemperatur, beispielsweise einer warmen Farbtemperatur, wobei die erste Farbtemperatur vorzugsweise eine Farbtemperatur im Bereich von 3000 bis 5300 K, insbesondere eine Farbtemperatur von 4000 K, aufweist, und
ein zweites Leuchtenmodul (1) zur Abgabe von Licht mit einer zweiten Farbtemperatur, beispielsweise einer kalten Farbtemperatur, wobei die zweite Farbtemperatur vorzugsweise eine Farbtemperatur im Bereich von 5300 K oder mehr, insbesondere eine Farbtemperatur von 6500 K, aufweist.

15. Lichttunnel (100), aufweisend ein oder mehrere Leuchtenmodule (1) nach einem der Ansprüche 1 bis 11 oder eine oder mehrere Leuchten nach einem der Ansprüche 12 bis 14.

## Claims

1. **An elongated lighting module (1)** for emitting light that supports visual inspection of a test object, such as a surface of a vehicle (200), by generating a pattern of light on a surface of the test object, the lighting module (1) comprising:
**an elongated light guide (10)** extending along a longitudinal axis (L); **a plurality of light sources (20)** distributed along the longitudinal axis (L) for coupling light into the light guide (10); **a plurality of light extraction structures (30)** for extracting light coupled into the light guide (10) out of the light guide (10), the light extraction structures (30) being provided on the light guide (10) and distributed along the longitudinal axis (L); **wherein the light guide (10) comprises:** a plurality of light extraction sections (13) on each of which a respective one of the light extraction structures (30) is provided; a connecting rib (14) that connects at least two of the light extraction sections (13) to each other; and a plurality of light injection webs (15), wherein from each of the light extraction sections (13) one or more of the light injection webs (15) protrude in a direction transverse to the longitudinal axis (L) of the light guide (10); **wherein the light sources (20) are arranged to couple light via the light injection webs (20) into the light guide (10) in the direction of the light extraction sections (13).**

2. **The lighting module (1) according to claim 1,** wherein **the light injection webs (15) comprise** one or more **first light injection webs (10)** that protrude from a first longitudinal side of the light guide (10), and one or more **second light injection webs (10)** that protrude from a second longitudinal side of the light guide (10).

3. **The lighting module (1) according to claim 1 or 2,** wherein **the light guide (10) comprises** a plurality of cross-shaped and/or T-shaped and/or H-shaped sections arranged along its longitudinal axis (L) and connected to each other, which are formed at least by the connecting rib (14) and the light injection webs (15).

4. **The lighting module (1) according to any one of the preceding claims,** wherein **the light guide (10) has a width which is at least double or triple the width of the connecting rib (14).**

5. **The lighting module (1) according to any one of the preceding claims,** wherein **each of the light injection webs (15)** and/or **the connecting rib (14)** has a width that is smaller than the width, for example the diameter, of the respective boundary of each of the light extraction structures (30).

6. **The lighting module (1) according to any one of the preceding claims,** wherein **the light guide (10) comprises a wall (17)** connecting the front side (11) and the rear side (12) of the light guide (10), which wall is at least partially flush with a boundary that bounds one of the light extraction structures (30).

7. **The lighting module (1) according to any one of the preceding claims,** wherein **the light extraction structures (30)** are each **point-shaped** and/or each delimited by a boundary having a closed peripheral shape such as a circular shape, and/or wherein **the light extraction structures (30)** each have a **width** (for example a diameter) **in the range of 10 to 60 mm, in particular in the range of 20 to 50 mm.**

8. **The lighting module (1) according to any one of the preceding claims,** wherein **the light extraction structures (30) are coatings and/or printings.**

9. **The lighting module (1) according to any one of the preceding claims,** further comprising **an elongated optical element (40)** having a longitudinal axis and **light-transmission sections (41)** distributed along said longitudinal axis (for example through-openings and/or transparent sections), the optical element (40) being arranged such that **at least a portion of the light rays extracted from the light guide (10) by means of the light extraction structures (30) can pass through the light-transmission sections (41).**

10. **The lighting module (1) according to any one of the preceding claims,** further comprising **a transparent cover (50)** for protecting the light guide (10) and preferably the optical element (40), **wherein preferably the cover (50) is arranged behind the optical element (40) as seen from the light guide (10).**

11. **The lighting module (1) according to any one of the preceding claims,** wherein **each light source (20) is arranged to couple light into a distal end (15.1) of the respective light injection web (15).**

12. **A luminaire comprising a plurality of lighting modules (1) according to any one of the preceding claims.**

13. **The luminaire according to claim 12,** wherein **the lighting modules (1) comprise at least one lighting module (1) that is movable relative to another lighting module (1), preferably pivotally mounted, such that it is tiltable relative to said other lighting module (1).**

14. **The luminaire according to claim 12 or 13,** wherein **the lighting modules (1) comprise:**
• a **first lighting module (1)** for emitting light with a first color temperature, for example a warm color temperature, the first color temperature being preferably in a range from **3000 to 5300 K,** particularly a color temperature of **4000 K;** and
• **a second lighting module (1)** for emitting light with a second color temperature, for example a cold color temperature, the second color temperature being preferably a color temperature in a range from **5300 K or higher,** particularly a color temperature of **6500 K.**

15. **A light tunnel (100) comprising one or more lighting modules (1) according to any one of claims 1 to 11, or one or more luminaires according to any one of claims 12 to 14.**

## Revendications

1. **Module d'éclairage allongé (1)** pour l'émission de lumière, destiné à faciliter l'inspection visuelle d'un objet à examiner, par exemple la surface d'un véhicule (200), en générant un motif de lumière sur une surface de l'objet à examiner, le module d'éclairage (1) comprenant : **un guide de lumière allongé (10)** s'étendant le long d'un axe longitudinal (L) ; **plusieurs sources de lumière (20)** réparties le long de l'axe longitudinal (L) afin d'introduire de la lumière dans le guide de lumière (10) ; **plusieurs structures d'extraction de lumière (30)** destinées à extraire la lumière introduite dans le guide de lumière (10) hors du guide de lumière (10), les structures d'extraction de lumière (30) étant disposées sur le guide de lumière (10) et réparties le long de l'axe longitudinal (L) ; **le guide de lumière (10) comportant** : plusieurs **sections d'extraction de lumière (13)** sur chacune desquelles est prévue une structure d'extraction de lumière (30) ; **une nervure de liaison (14)** reliant au moins deux des sections d'extraction de lumière (13) entre elles ; et **plusieurs éléments d'injection de lumière (15),** dont un ou plusieurs, partant de **chaque section d'extraction de lumière (13),** font saillie dans une direction transverse à l'axe longitudinal (L) du guide de lumière (10) ; **les sources de lumière (20) étant disposées pour introduire de la lumière via les éléments d'injection de lumière (20) dans le guide de lumière (10) en direction des sections d'extraction de lumière (13).**

2. **Module d'éclairage (1) selon la revendication 1,** dans lequel **les éléments d'injection de lumière (15) comprennent** un ou plusieurs **premiers éléments d'injection de lumière (10)** faisant saillie sur un premier côté longitudinal du guide de lumière (10), et un ou plusieurs **seconds éléments d'injection de lumière (10)** faisant saillie sur un deuxième côté longitudinal du guide de lumière (10).

3. **Module d'éclairage (1) selon la revendication 1 ou 2,** dans lequel **le guide de lumière (10) comporte** plusieurs sections en forme de croix et/ou de T et/ou de H, disposées le long de son axe longitudinal (L) et reliées entre elles, qui sont formées au moins par la nervure de liaison (14) et les éléments d'injection de lumière (15).

4. **Module d'éclairage (1) selon l'une quelconque des revendications précédentes,** dans lequel **le guide de lumière (10) présente une largeur qui est au moins double ou triple de la largeur de la nervure de liaison (14).**

5. **Module d'éclairage (1) selon l'une quelconque des revendications précédentes,** dans lequel **chaque élément d'injection de lumière (15)** et/ou **la nervure de liaison (14)** présente une largeur inférieure à la largeur, par exemple le diamètre, du contour respectif de chaque structure d'extraction de lumière (30).

6. **Module d'éclairage (1) selon l'une quelconque des revendications précédentes,** dans lequel **le guide de lumière (10) comporte une paroi (17)** reliant la face avant (11) et la face arrière (12) du guide de lumière (10), ladite paroi (17) étant **au moins partiellement affleurante avec un contour délimitant l'une des structures d'extraction de lumière (30).**

7. **Module d'éclairage (1) selon l'une quelconque des revendications précédentes,** dans lequel **les structures d'extraction de lumière (30)** sont chacune **ponctuelles** et/ou chacune délimitée par un contour fermé, tel qu'un contour circulaire, et/ou dans lequel **les structures d'extraction de lumière (30)** ont chacune **une largeur,** par exemple un diamètre, **comprise entre 10 mm et 60 mm, en particulier entre 20 mm et 50 mm.**

8. **Module d'éclairage (1) selon l'une quelconque des revendications précédentes,** dans lequel **les structures d'extraction de lumière (30) sont des revêtements et/ou des impressions.**

9. **Module d'éclairage (1) selon l'une quelconque des revendications précédentes,** comprenant en outre **un élément optique allongé (40)** doté d'un axe longitudinal et **de sections de passage de lumière (41)** disposées le long de cet axe longitudinal (telles que des ouvertures traversantes et/ou des sections transparentes), ledit élément optique (40) étant agencé de sorte qu'**au moins une partie des rayons lumineux extraits du guide de lumière (10) au moyen des structures d'extraction de lumière (30) puissent traverser les sections de passage de lumière (41).**

10. **Module d'éclairage (1) selon l'une quelconque des revendications précédentes,** comprenant en outre **un couvercle transparent (50)** destiné à protéger le guide de lumière (10) et de préférence l'élément optique (40), **le couvercle (50) étant de préférence disposé, vu depuis le guide** de **lumière (10), derrière l'élément optique (40).**

11. **Module d'éclairage (1) selon l'une quelconque des revendications précédentes,** dans lequel **chaque source de lumière (20)** est disposée pour **injecter de la lumière dans une extrémité distale (15.1) de l'élément d'injection de lumière (15) lui correspondant.**

12. **Luminaire, comprenant plusieurs modules d'éclairage (1)** selon l'une quelconque des revendications précédentes.

13. **Luminaire selon la revendication 12,** dans lequel **les modules d'éclairage (1)** comprennent au moins **un module d'éclairage (1)** qui est **mobile par rapport à un autre module d'éclairage (1),** de préférence **monté de manière articulée,** de sorte qu'il **puisse être incliné par rapport audit autre module d'éclairage (1).**

14. **Luminaire selon la revendication 12 ou 13,** dans lequel **les modules d'éclairage (1)** comprennent :
• **un premier module d'éclairage (1)** destiné à émettre de la lumière avec une première température de couleur, par exemple une température de couleur chaude, la première température de couleur étant de préférence une température de couleur dans l'intervalle de **3000 à 5300 K,** notamment une température de couleur de **4000 K,** et
• **un second module d'éclairage (1)** destiné à émettre de la lumière avec une seconde température de couleur, par exemple une température de couleur froide, la seconde température de couleur étant de préférence une température de couleur dans l'intervalle de **5300 K ou plus,** notamment une température de couleur de **6500 K.**

15. **Tunnel lumineux (100),** comprenant un ou plusieurs modules d'éclairage (1) selon l'une quelconque des revendications 1 à 11, ou un ou plusieurs luminaires selon l'une quelconque des revendications 12 à 14.
